# EUROPÄISCHE PATENTSCHRIFT

(11) **EP 1 879 788 B1**
(45) Veröffentlichungstag und Bekanntmachung des Hinweises auf die Patenterteilung: **30.07.2008**
(21) Anmeldenummer: 06742334.3
(22) Anmeldetag: 12.05.2006
(51) Int. Cl.: B62K 21/06

(54) **SICHERUNGSEINRICHTUNG FÜR STEUERKOPFLAGERUNGEN UND VERFAHREN ZUR SICHERUNG VON STEUERKOPFLAGERUNGEN**
SECURING DEVICE FOR HEAD TUBE BEARINGS, AND METHOD FOR SECURING HEAD TUBE BEARINGS
DISPOSITIF DE SECURITE DE PALIERS DE DIRECTION ET LEUR PROCEDE DE SECURITE

(30) Priorität: 12.05.2005 DE 102005022808
(43) Veröffentlichungstag der Anmeldung: 23.01.2008
(73) Patentinhaber: Weidner, Frank, 70193 Stuttgart (DE)
(72) Erfinder: Weidner, Frank, 70193 Stuttgart (DE)
(74) Vertreter: Herzog, Günter
(86) Internationale Anmeldenummer: PCT/DE2006/000826
(87) Internationale Veröffentlichungsnummer: WO 2006/119757

(56) Entgegenhaltungen:
- EP-A- 1 529 725
- WO-A-20/04031027
- DE-A1- 19 940 969
- DE-U1- 7 611 747
- DE-U1- 29 520 093
- FR-A- 2 815 928
- US-A- 627 187
- US-A- 5 540 457
- US-A- 5 544 905
- US-A1- 2003 172 768
- US-B1- 6 167 780

## Beschreibung

### Stand der Technik

Die Erfindung geht aus von einer Sicherungseinrichtung für Steuerkopflagerungen von Zweiradfahrzeugen, beispielsweise Fahrrädern, nach der Gattung des Hauptanspruchs.

Zur Gewährleistung einer spielfreien Lagerung zwischen dem zum Rahmen des Zweiradfahrzeugs gehörenden Steuerkopfrohr und dem Schaftrohr der Gabel, muss auf deren Langerungen dauerhaft eine axiale Kraft aufgebracht werden. Die hierzu bekannten Schraubverbindungen, bei denen der Lenkervorbau mittels einer in das Schaftrohr der Gabel eingeschraubten Einstellschraube gegen einen geteilten Druckring der oberen Lagereinheit gedrückt wird (US 5,095,770) oder bei denen eine auf das Schaftrohr aufgeschraubte Befestigungsmutter einen Spannring gegen einen konischen Zentrierring drückt (US 5,544,905), besitzen aufgrund der den Querschnitt des Schafrohres schwächenden Gewinde sowie wegen der von ihnen ausgehenden Kerbwirkung auf das Schaftrohr eine eingeschränkte Stabilität.

Zur Vermeidung dieser Nachteile wurden Klemmverbindungen zur spielfreien Verbindung von Schaftrohr und Steuerkopfrohr entwickelt. Die Klemmwirkung wird ebenfalls durch geteilte Druckringe mit konischen Außenflächen erzielt, die die aufgebrachte Axialkraft in eine auf das Schaftrohr wirkende Normalkraft umsetzen. In der Regel dient das Abstandsrohr des Lenkervorbaus als Druckübertrager, wobei die auf das Abstandrohr aufzubringende Axialkraft durch Gewindebolzen oder Schrauben aufgebracht werden, die mit in dem Schaftrohr angeordneten Spreizteilen so in Wirkverbindung stehen, dass diese sich beim Anziehen der Schraube in der Innenwandung des Schafrohres verhaken (US 6,126,323) oder radial auseinandergedrückt werden, so dass sie unter Druck an der Innenwandung des Schafrohres anliegen (DE 196 44 968 A1). Der Nachteil dieser Lösungen besteht darin, dass mit dem Festziehen des Bolzens oder der Schraube sowohl die Axialkraft auf die Lager aufgebracht als auch der Lenkervorbau befestigt wird. Dadurch kann es vorkommen, dass die zur Erzielung einer sicheren Lenkerbefestigung erforderliche Kraft als Axialkraft zu groß ist und die Steuerkopflagerung dadurch schwergängig wird. Andererseits vergrößert sich bei jeder Lockerung der Schraube, beispielsweise zum Zweck des Verdrehens des Lenkers zum besseren Transport, das Spiel in den Lagern. Außerdem handelt es sich bei der Befestigung mittels Spreizteilen im Innern des Schaftrohres um verhältnismäßig aufwendige Konstruktionen. Nicht zuletzt kann es durch die gegen die Innenwandung des Schaftrohres gerichteten Spannkräfte auch zu unerwünschten Verformungen desselben kommen, so dass sich der Lenkervorbau nur noch schwer oder gar nicht mehr vom Schaftrohr lösen lässt. Mechanische Beschädigungen des Schaftrohres erhöhen auch dessen Anfälligkeit gegen vorzeitigen Bruch in extremen Belastungssituationen.

Eine eigenständige Sicherung der Steuerkopflagerung, bei der der Lenker ohne Beeinträchtigung des eingestellten Lagerspiels demontiert werden kann, besteht aus einem Druckring, dessen Innenfläche mit scharfen zahnartigen Riefen versehen ist, mit denen er mittels Druckelementen gegen den Außenmantel des Schaftrohres gepresst wird. Diese Druckelemente umfassen den Druckring radial und können aus einer konischen Schraubverbindung oder einem zylindrischen Klemmring bestehen (US 5,332,245). Auch bei dieser Lösung wird das Schaftrohr durch die Aufbringung der radialen Spannkräfte in Mitleidenschaft gezogen, da sich die scharfen Kanten des Druckringes in die Oberfläche des Schaftrohres einarbeiten und diese Riefen Ursache für einen vorzeitigen Bruch bei Extrembeanspruchung sein können.

Bei einer ähnlichen Lösung, die offensichtlich ohne eine mechanische Beeinträchtigung des Schaftrohres auskommt, wird der Druckring mittels einer aus Lagerschale für die obere Lagereinheit und Gegenmutter bestehenden Schraubverbindung gegen das Schaftrohr gedrückt. Hierzu weist der Druckring eine obere kurze und eine untere lange konische Fläche sowie mehrere axiale oben offene Schlitze auf. Durch Zusammenschrauben von Lagerschale und Gegenmutter werden die zwischen den Schlitzen verbleibenden elastischen Bereiche des Druckrings gegen das Schaftrohr gedrückt (DE G 94 20 884.0). Der Nachteil dieser Lösung sowie der vorgenannten Sicherung der Steuerkopflagerung nach US 5,332,245 besteht darin, dass der axiale Druck zur Gewährleistung der Spielfreiheit der Lager zunächst von Hand, beispielsweise durch Niederdrücken des Lenkervorbaus, auf den Druckring aufgebracht werden muss, und zwar so lange, bis die Schraub- bzw. Klemmverbindungen zur Wirkung gelangen. Eine solche manuelle Druckaufbringung ist körperlich anstrengend und außerdem nicht reproduzierbar.

Schließlich ist eine Steuerkopflagerung für Zweiradfahrzeuge bekannt, bei der der Druckring Teil des Innenrings der oberen Lagereinheit ist. Auf die konische Außenfläche des Druckrings ist ein Spannring aufsetzbar. Die konische Außenfläche des Druckrings sowie die komplementäre Innenfläche des Spannrings sind so gestaltet, dass die Verbindung nach einmaliger Druckaufbringung auf den Spannring selbsthemmend ist, so dass dauerhaft ein Auffedern des elastischen Teils des Innenrings verhindert wird (DE 103 30 419 A1). Werden in der Steuerkopflagerung auch axiale Kräfte aufnehmende Kegelrollenlager verwendet, verhindert die Selbsthemmung zwischen Innenring und Druckring zwar ein Auffedern des elastischen Teils des Innenrings bei bzw. nach der Montage, jedoch ist zur Aufnahme der axialen Kraftkomponente der Kegelrollenlager eine zusätzliche Sicherung erforderlich. Nachteilig ist auch, dass das Lösen der Kegelsitzverbindung nicht ohne weiteres möglich ist.

Dokument DE 199 409 69 A1 offenbart eine Sicherungseinrichtung gemäß dem Oberbegriff von Anspruch 1 bei der als Widerlager für die Aufbringung der Druckkraft ein C-fömiger Ring auf einem gewindefreien Schaftrohr festgeklemmt wird. In seinem Inneren weist der C-förmige Ring eine Schulter auf, an der ein erstes koaxial zu diesem angeordnetes Ringglied radial beweglich angeordnet ist. An seiner dem Lenkkopflager zugewandten Stirnfläche weist das erste Ringglied eine Vielzahl von Zähnen und an seinem Umfang eine Einkerbung auf. Mit seinen Zähnen steht es mit einer ebenfalls mit Zähnen versehenen Stirnfläche eines zweiten Ringgliedes in Wirkverbindung, das mit seiner gegenüberliegenden Stirnfläche auf der Lenkkopflager-Baugruppe aufliegt. In diese Stirnfläche sind auch zwei Nuten eingebracht, mit denen das zweite Ringglied durch zwei radial in dem C-förmigen Ring einbrachte Stifte gegen Verdrehung gesichert ist. Der C-förmige Ring weist ferner in dem Bereich, in dem sich das erste Ringglied befindet eine radiale Gewindebohrung auf, in die ein Gewindestift einschraubbar ist. Mit seinem inneren Ende liegt der Gewindestift an der Einkerbung des ersten Ringgliedes an. Durch Drehen des Gewindestifts wird das erste Ringlied gedreht, wobei dessen Zähe auf den Zähnen des zweiten Ringliedes gleiten, so dass dieses eine axiale Bewegung in Richtung der Lenkkopflager-Baugruppe ausführt und dabei das Lagerspiel verringert.

### Die Erfindung und ihre Vorteile

Die erfindungsgemäße Sicherungseinrichtung mit den kennzeichnenden Merkmalen des Hauptanspruchs hat demgegenüber den Vorteil, dass die Sicherungseinrichtung ohne großen Kraftaufwand bedienbar ist, d. h. der Axialdruck braucht nicht mehr durch direkten manuellen Druck auf die obere Lagereinheit aufgebracht zu werden. Die Stelleinrichtung wirkt quasi als Übersetzung einer manuellen Stellbewegung. Erfindungsgemäß besteht das Widerlager aus einem auf dem Schaftrohr arretierbaren Klemmring und die Axialdruckeinrichtung aus einem unterhalb des Klemmrings drehbeweglich angeordneten Druckring. Der Druckring wirkt mit seiner unteren Stirnfläche direkt oder indirekt auf die obere Lagereinheit. Jede der einander zugewandten Stirnflächen von Klemmring und Druckring weist mindestens eine aus der Ebene der Stirnfläche herausragende Kontur auf, wobei mindestens eine der Konturen kontinuierlich, also eine Steigung bildend, aus der Stirnfläche hervortritt. Diese Kontur bzw. Konturen bilden auf der jeweiligen Stirnfläche flache Keile. Sinnvollerweise sind die Konturen immer paarweise gegenüberliegend angeordnet. Klemmring und Druckring sind mit einer tangential wirkenden Stelleinrichtung versehen, die den Druckring gegenüber dem arretierten Klemmring verdreht. Durch Betätigung der Stelleinrichtung bewegt sich der Druckring um seine Achse, wodurch die beiden aus den Stirnflächen von Klemm- und Druckring herausragenden Konturen miteinander in Wirkverbindung treten und der Abstand zwischen beiden Ringen sich dadurch vergrößert. Da der Klemmering am Schaftrohr fest sitzt, bewegt sich der Druckring axial nach unten auf die obere Lagereinheit zu und drückt dabei auf das Teil der Steuerkopflagerung, das axialen und/oder radialen Spanndruck erzeugt. Aufgrund der kinematischen Verhältnisse bei der Erzeugung der Axialbewegung aus einer Drehbewegung des Druckrings ist eine Umkehrung der Bewegung, also ein Nachlassen des Axialdruckes aufgrund der entgegenwirkenden Axialkomponente aus dem Spanndruck auf das Schaftrohr, nicht wahrscheinlich, so dass diese Sicherung der Steuerkopflagerung dauerhaft zuverlässig ist. Nachdem das erfindungsgemäße Widerlager mit seiner Einrichtung zur Aufbringung eines Axialdrucks, im folgenden Axialdruckeinrichtung genannt, auf das Schaftrohr aufgesetzt und bis zum Anschlag an die obere Lagereinheit aufgeschoben ist, wird das Widerlager gegenüber dem Schaftrohr arretiert. Danach wird der Axialdruck mittels der genannten Einrichtung auf die obere Lagereinheit aufgebracht. Dies kann auf unterschiedliche Art und Weise, beispielsweise durch Herausschrauben von Bolzen oder Exzentern, erfolgen. Sollte sich das Spiel im Laufe der Benutzung des Zweiradfahrzeugs vergrößern, kann es durch Nachregulieren der Axialdruckeinrichtung wieder verringert werden.

Selbstverständlich kann die Sicherungseinrichtung auch als zusätzliche Sicherung bei einer selbsthaltenden Steuerkopflagerung, bei der der Axialdruck bereits durch das Aufsetzen eines Spannrings erzeugt wird, wie beispielsweise in der DE 103 30 419 A1 beschrieben, verwendet werden. Dies ist insbesondere bei Verwendung von Kegelrollenlagern von Vorteil.

Nach einer vorteilhaften Ausgestaltung der Erfindung besteht der Klemmring aus einem offenen Ring, der zur Arretierung auf dem Schaftrohr an seiner Öffnung mit einer Klemmschraube versehen ist.

Nach einer anderen vorteilhaften Ausgestaltung der Erfindung ist die mindestens eine aus der Stirnfläche hervortretende Kontur, die keine Steigung aufweist, wulstartig ausgebildet, so dass sie beim Entlanggleiten der bzw. an der gegenüberliegenden keilförmigen Kontur wie ein Nocken wirkt.

Nach einer anderen vorteilhaften Ausgestaltung der Erfindung sind jeweils mindestens zwei aus der Ebene der Stirnflächen heraustretende Konturen vorgesehen. Bei mehreren, die axiale Bewegung bewirkenden Konturen wird die Flächenpressung pro Kontur und damit die Materialbelastung reduziert. Außerdem verringert sich die Neigung des Druckrings zum Verkanten gegenüber dem Schaftrohr, wodurch eine Schwergängigkeit der Sicherungseinrichtung vermieden wird. Werden lediglich zwei die axiale Bewegung bewirkende Konturen vorgesehen, sollten diese aus diesem Grund auch diametral gegenüberliegend angeordnet sein. Ein Verkanten kann gänzlich ausgeschlossen werden, wenn drei wirkenden Konturen vorgesehen werden.

Nach einer zusätzlichen vorteilhaften Ausgestaltung der Erfindung weisen die Konturen an beiden einander zugewandten Stirnflächen von Klemmring und Druckring eine Steigung auf. Das hat den Vorteil, dass sich die Flächenpressung der bei der Verdrehung des Druckrings aufeinander gleitenden Konturen verringert und dadurch eine leichtere Einstellung des Spiels der Steuerkopflagerung möglich ist.

Nach einer anderen Ausgestaltung der Erfindung weist die Oberfläche der aus der oder den Stirnflächen heraustretenden Konturen ein sägezahnähnliches Profil auf. Dadurch ist eine rastende Einstellung des Spiels der Steuerkopflagerung möglich und ein eigenständiges Zurückdrehen des Druckringes aufgrund der entgegenwirkenden Axialkomponente aus dem Spanndruck auf das Schaftrohr wird verhindert.

Nach einer anderweitigen vorteilhaften Ausgestaltung der Erfindung ist als Mittel zum Verdrehen des Druckrings gegenüber dem Klemmring in dem Randbereich des Druckrings ein Druckelement vorgesehen, an dem ein Stellglied einer an dem Klemmring angeordneten Stelleinrichtung tangential angreift.

Nach einer diesbezüglichen vorteilhaften Ausgestaltung der Erfindung besteht das Druckelement aus einem Stift. Die Stelleinrichtung des Klemmrings ist in einer nach außen ragenden Verstärkung des Mantels des Klemmrings untergebracht. Sie ist mit einer von unten offenen, sich entlang des Mantels des Klemmrings verlängernden Ausnehmung versehen, in die der Stift hineinragt. In die Verstärkung des Mantels ist ferner eine tangential zum Mantel des Klemmrings verlaufende Gewindebohrung eingebracht, die in die längliche Ausnehmung mündet. Als Stellglied ist eine Spannschraube in die Gewindebohrung einschraubbar, die mit ihrem eingeschraubten Ende auf den Stift auftrifft und diesen durch fortgesetztes Einschrauben innerhalb der Ausnehmung verschiebt.

Weitere Vorteile und vorteilhafte Ausgestaltungen der Erfindung sind der nachfolgenden Beispielbeschreibung, der Zeichnung und den Ansprüchen entnehmbar.

Zeichnung

Ein Ausführungsbeispiel der Erfindung ist in der Zeichnung dargestellt und im Folgenden näher beschrieben.
Es zeigen:
- Fig. 1: eine Schnittdarstellung durch eine Steuerkopflagerung,
- Fig. 2: eine räumliche Darstellung der Sicherungseinrichtung und
- Fig. 3: eine räumliche Ansicht des Klemmrings der Sicherungseinrichtung von unten.

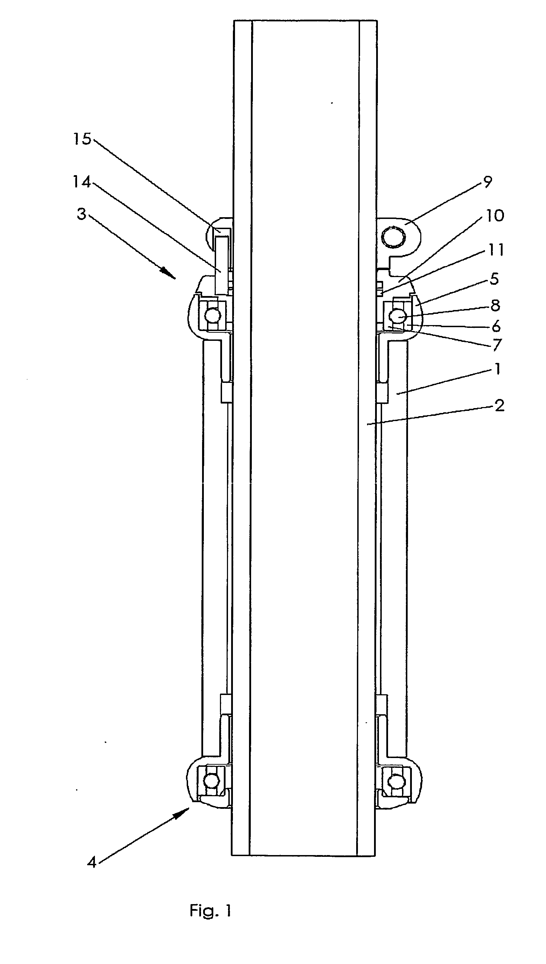

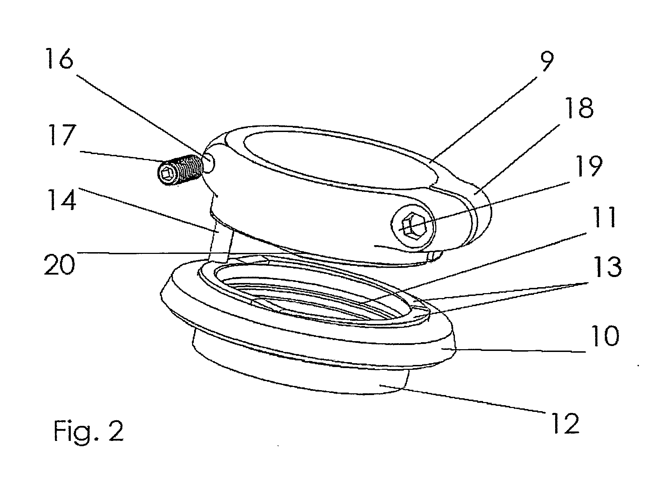

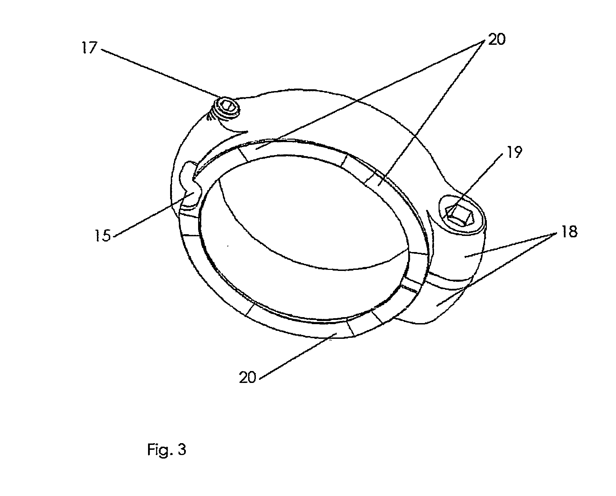

Wie aus Fig. 1 zu erkennen, besteht die Steuerkopflagerung aus einem Steuerkopfrohr 1, in dem ein Schaftrohr 2 einer hier nicht näher dargestellten Gabel eines Zweiradfahrzeugs mittels einer oberen Lagereinheit 3 und einer unteren Lagereinheit 4 drehbar gelagert ist. Als Lager können beispielsweise Schrägkugellager verwendet werden. Das Steuerkopfrohr 1 ist Bestandteil des Zweiradfahrzeugrahmens, der hier ebenfalls nicht dargestellt ist. Zur Aufnahme der oberen Lagereinheit 3 weist das Steuerkopfrohr 1 an seinem oberen Ende eine Lagerschale 5 auf, in die ein aus Außenring 6, Innenring 7 sowie Kugeln 8 bestehendes Kugellager eingepresst ist. Die obere Lagereinheit 3 wird durch die erfindungsgemäße Sicherungseinrichtung, die in Fig. 2 dargestellt ist, abgedeckt. Sie besteht aus einem Klemmring 9 und einem Druckring 10, der im vorliegenden Beispiel als die gesamte obere Lagereinheit 3 nach oben hin abschließender Deckel ausgebildet ist. Zum Ausgleich des radialen Spiels zwischen Druckring 10 und Schaftrohr 2 sowie zur Abdichtung der oberen Lagereinheit 3 weist der Druckring 10 an seiner zylindrischen Innenfläche zwei Nuten 11 zur Aufnahme von Dichtungen, beispielsweise O-Ring-Dichtungen, auf. Ferner weist der Druckring 10 ein zylindrisches Führungsteil 12 auf, an dessen Außenfläche der Innenring 7 möglichst spielfrei anliegt. Die obere Stirnfläche des Druckrings 10 ist mit drei keilförmig aus der Stirnfläche heraustretenden Erhebungen 13 versehen, wobei der Anstieg der Erhebungen in gleicher Richtung, im vorliegenden Beispiel entgegen dem Urzeigersinn, verläuft. Außerdem ragt aus der oberen Stirnfläche des Druckrings 10 ein Stift 14 heraus, der, wie aus Fig. 3 erkennbar, von einer in die Wandung des Klemmrings 9 eingearbeiteten länglichen Ausnehmung 15 aufgenommen wird. Die Ausnehmung 15 weist dieselbe Krümmung auf wie der Mantel des Klemmrings 9, so dass der Stift 14 in dieser gleiten kann. Tangential zum Klemmring 9 mündet in die Ausnehmung 15 ferner eine Gewindebohrung 16, in die eine Spannschraube 17 einschraubbar ist. Der Klemmring 9 ist geteilt ausgeführt und an seiner Teilung mit Mitteln zum Festklemmen auf dem Schaftrohr 2 versehen. Im vorliegenden Beispiel sind die beiden durch die Teilung entstandenen Enden des Klemmrings 9 an dieser. Stelle als Gewindeösen 18 ausgebildet, in die eine Klemmschraube 19 einschraubbar ist. Wie aus Fig. 3 ferner erkennbar ist, weist der Klemmring 9 an seiner unteren Stirnfläche ebenfalls drei keilförmig aus der Stirnfläche heraustretende Erhebungen 20 auf, wobei deren Anstieg allerdings entgegengesetzt zu dem Anstieg der Erhebungen 13 des Druckrings 10 verläuft. Die Position des Stiftes 14 sowie Teilung und Anstieg der Erhebungen 13 und 20 sind so aufeinander abgestimmt, dass bei deckungsgleicher Berührung der keilförmigen Erhebungen 20 von Klemmring 9 mit den komplementären keilförmigen Erhebungen 13 des Druckrings 10 der Stift 14 innerhalb der Ausnehmung 15 an der Wandung anliegt, an der die Gewindebohrung 16 für die Spannschraube 17 in die Ausnehmung eintritt.

Nachfolgend soll die Wirkungsweise der Erfindung näher erläutert werden: Zur Sicherung der oberen Lagereinheit 3 werden der Druckring 10 und der Klemmring 9 auf das Schaftrohr 2 bis zum Anschlag an den Innenring 7 aufgeschoben. Der Stift 14 ragt dabei in die Ausnehmung 15 des Klemmrings 9 hinein. Die Spannschraube 17 ist in dieser Position nur so weit in den Klemmring 9 hineingedreht, dass sie noch nicht in die Ausnehmung 15 hineinragt. Anschließend wird der Klemmring 9 so positioniert, dass der Abstand zwischen Klemmring 9 und Druckring 10 am kleinsten ist, d. h. die keilförmigen Erhebungen 13 und 20 einander komplementär gegenüberliegen. In dieser Position wird der Klemmring 9 durch Anziehen der Klemmschraube 19 am Schaftrohr 2 festgeklemmt. Danach wird die Spannschraube 17 weiter in die Ausnehmung 15 hineingedreht, bis sie gegen den Stift 14 drückt und darüber hinaus weiter gedreht, bis ihr ein ausreichend großer Widerstand entgegenwirkt, ohne dass sie den Stift 14 verbiegt oder abschert bzw. das Gewinde überdreht wird. Der Stift 14 vollführt dadurch innerhalb der Ausnehmung 15 eine Bewegung auf einem Kreisbogen. Der mit dem Stift 14 fest verbundene Druckring 10 macht diese kurze Drehbewegung mit, wobei er sich aufgrund des Gleitens der keilförmigen Erhebungen 13 und 20 aufeinander auch ein kleines Stück in axialer Richtung bewegt und dadurch sich auf den Innenring 7 der oberen Lagereinheit 3 zubewegt. Dem Druck der Spannschraube 17 weicht der Stift 14 so lange aus, bis der Druckring 10 fest am Innenring 7 anliegt und diesen arretiert. Die Axialbewegung des Druckrings 10 beträgt wenige Zehntel bis ca. 1 mm. Das Eindringen von Feuchtigkeit und Schmutz in die Obere Lagereinheit 3 wird durch das Einlegen von Dichtungsringen, beispielsweise O-Ringen, in die Nuten 11 des Druckrings 10 vermieden. Zusätzlich ist es noch möglich, den entstehenden kleinen Spalt durch eine am Außenmantel von Klemmring 9 und Druckring 10 anliegende Dichtung zu schützen. Zur Verhinderung des Zurückgleitens des Druckrings 10 und der damit verbundenen Lockerung der oberen Lagereinheit 3 kann die Spannschraube 17 noch zusätzlich gesichert werden.

### Bezugszahlenliste

- 1: Steuerkopfrohr
- 2: Schaftrohr
- 3: Obere Lagereinheit
- 4: Untere Lagereinheit
- 5: Lagerschale
- 6: Außenring
- 7: Innenring
- 8: Kugeln
- 9: Klemmring
- 10: Druckring
- 11: Nut
- 12: Zylindrisches Teil
- 13: Keilförmige Erhebungen
- 14: Stift
- 15: Längliche Ausnehmung
- 16: Gewindebohrung
- 17: Spannschraube
- 18: Gewindeösen
- 19: Klemmschraube
- 20: Keilförmige Erhebungen

## Patentansprüche

1. Sicherungseinrichtung für Steuerkopflagerungen von Zweiradfahrzeugen, wobei die Steuerkopflagerung eine obere und eine untere Lagereinheit aufweist, durch die ein Schaftrohr der Gabel des Zweiradfahrzeugs mit einem Steuerkopfrohr des Rahmens des Zweiradfahrzeugs drehbeweglich verbindbar ist, wobei
die Sicherungseinrichtung aus einem oberhalb der oberen Lagereinheit (3) auf dem Schaftrohr (2) arretierbaren Widerlager besteht, das mit einer Einrichtung zur Aufbringung eines Axialdrucks auf die obere Lagereinheit (3), im folgenden Axialdruckeinrichtung genannt, in Wirkverbindung steht, und das Widerlager aus einem auf dem Schaftrohr (2) arretierbaren Klemmring (9) besteht, und die Axialdruckeinrichtung aus einem drehbeweglich angeordneten Druckring (10) besteht wobei an dem Klemmring (9) und dem Druckring (10) Mittel zur Verdrehung des Druckrings (10) gegenüber dem Klemmring (9) vorgesehen sind, **dadurch gekennzeichnet,**
- **dass** der Druckring unmittelbar unter dem Klemmring (9) angeordnet ist und
- **dass** die einander zugewandten Stirnflächen von Klemmring (9) und Druckring (10) jeweils mindestens eine aus der Ebene der Stirnfläche herausragende Kontur (20, 13) aufweisen, wobei mindestens eine der Konturen (13, 20) eine Steigung aufweist.

2. Sicherungseinrichtung nach Anspruch 1,
**dadurch gekennzeichnet,**
**dass** der Klemmring (9) ein offener Ring ist und zu seiner Arretierung auf dem Schaftrohr (2) eine Klemmschraube (19) aufweist.

3. Sicherungseinrichtung nach Anspruch 1,
**dadurch gekennzeichnet,**
**dass** die mindestens eine aus der Ebene einer Stirnfläche herausragende Kontur, die keine Steigung aufweist, nockenformig ist.

4. Sicherungseinrichtung nach Anspruch 1 oder 3, **dadurch gekennzeichnet,**
**dass** je zugewandter Stirnfläche mindestens zwei herausragende Konturen vorgesehen sind.

5. Sicherungseinrichtung nach einem der Ansprüche 1, 3 oder 4,
**dadurch gekennzeichnet,**
**dass** sich zwei aus der Ebene der Stirnflächen herausragende Konturen diametral gegenüberliegen.

6. Sicherungseinrichtung nach Anspruch 1 oder 3, **dadurch gekennzeichnet,**
**dass** jeweils drei aus der Ebene der Stirnflächen herausragende Konturen (13, 20) vorgesehen sind.

7. Sicherungseinrichtung nach einem der Ansprüche 1 oder 4 bis 6,
**dadurch gekennzeichnet,**
**dass** die Konturen an beiden einander zugewandten Stirnflächen von Klemmring (9) und Druckring (10) eine Steigung aufweisen.

8. Sicherungseinrichtung nach einem der Ansprüche 1 oder 4 bis 7,
**dadurch gekennzeichnet,**
**dass** die aus der oder den Stirnflächen herausragenden, eine Steigung aufweisenden Konturen eine sägezahnähnlich Oberfläche aufweisen.

9. Sicherungseinrichtung nach Anspruch 1, **dadurch gekennzeichnet,**
**dass** als Mittel zur Verdrehung des Druckrings (10) gegenüber dem Klemmring (9) an dem Druckring (10) ein Druckelement vorgesehen ist, an dem ein Stellglied einer an dem Klemmring (9) angeordneten Stelleinrichtung tangential angreift.

10. Sicherungseinrichtung nach Anspruch 9,
**dadurch gekennzeichnet,**
**dass** das Druckelement ein Stift (14) ist und die Stelleinrichtung des Klemmrings (9) aus einer Verstärkung des Mantel des Klemmrings (9) besteht, in die eine den Stift (14) aufnehmende sich entlang des Mantels des Klemmrings (9) verlängernde Ausnehmung (15) eingebracht ist, in die wiederum eine tangential zum Mantel des Klemmrings (9) verlaufende Gewindebohrung (16) mündet, und dass als Stellglied eine Spannschraube (17) in die Gewindebohrung (16) einschraubbar ist, die mit ihrem eingeschraubten Ende auf den Stift (14) auftrifft und diesen in der Ausnehmung (15) verschiebt.

## Claims

1. Securing device for steering head bearings of two-wheeled vehicles, wherein the steering head bearing has an upper and a lower bearing unit, by means of which a shaft tube of the fork of the two-wheeled vehicle can be connected in such a manner that it can rotate to a steering head tube of the frame of the two-wheeled vehicle,
wherein
the securing device consists of a thrust bearing which can be locked on the shaft tube (2) above the upper bearing unit (3), which thrust bearing is in functional connection with a device for applying an axial pressure on the upper bearing unit (3), referred to below as an axial pressure device, and the thrust bearing consists of a clamping ring (9) which can be locked on the shaft tube (2) and the axial pressure device consists of a pressure ring (10) which is arranged in such a manner that it can rotate, wherein means are provided on the clamping ring (9) and on the pressure ring (10) for rotating the pressure ring (10) with respect to the clamping ring (9),
**characterised in that**
- the pressure ring is arranged directly below the clamping ring (9) and
- the end faces of the clamping ring (9) and pressure ring (10), which end faces face each other, in each case have at least one contour (20, 13) which projects out of the plane of the end face, wherein at least one of the contours (13, 20) is sloped.

2. Securing device according to Claim 1,
**characterised in that**
the clamping ring (9) is an open ring and has a clamping screw (19) for the purpose of locking it on the shaft tube (2).

3. Securing device according to Claim 1,
**characterised in that**
the at least one contour, which projects out of the plane of an end face and is not sloped, is cam-shaped.

4. Securing device according to Claim 1 or 3,
**characterised in that**
at least two projecting contours are provided per facing end face.

5. Securing device according to one of Claims 1, 3 or 4,
**characterised in that**
two contours, which project out of the plane of the end faces, are diametrically opposite one another.

6. Securing device according to Claim 1 or 3,
**characterised in that**
in each case three contours (13, 20), which project out of the plane of the end faces, are provided.

7. Securing device according to one of Claims 1 or 4 to 6,
**characterised in that**
the contours on both end faces of the clamping ring (9) and the pressure ring (10), which end faces face each other, are sloped.

8. Securing device according to one of Claims 1 or 4 to 7,
**characterised in that**
the contours, which project out of the end face(s) and are sloped, have a surface which is similar to saw teeth.

9. Securing device according to Claim 1,
**characterised in that**
a pressure element is provided on the pressure ring (10) as means for rotating the pressure ring (10) with respect to the clamping ring (9), on which pressure element an actuating member of an actuating device, which is arranged on the clamping ring (9), tangentially engages.

10. Securing device according to Claim 9,
**characterised in that**
the pressure element is a pin (14) and the actuating device of the clamping ring (9) consists of a reinforcement of the outside of the clamping ring (9), into which reinforcement a recess (15) is introduced, which receives the pin (14) and extends along the outside of the clamping ring (9), and into which a threaded bore (16), which runs tangentially with respect to the outside of the clamping ring (9), in turn opens out, and that a tensioning screw (17) can be screwed as the actuating member into the threaded bore (16), which screw bears with its screwed-in end on the pin (14) and displaces the latter in the recess (15).

## Revendications

1. Dispositif de sécurité pour paliers de direction de véhicules à deux roues, le palier de direction présentant une unité palier supérieure et inférieure, qui permettent de raccorder de manière rotative un tube tige de la fourche du véhicule à deux roues et un tube tige de direction du cadre du véhicule à deux roues,
le dispositif de sécurité étant constitué d'un support pouvant être arrêté sur le tube tige (2) au dessus de l'unité de palier supérieure (3), qui est en liaison active avec un équipement destiné à appliquer une pression axiale sur l'unité palier supérieure (3), appelé ci après équipement de pression axiale et le support consistant dans une bague de serrage (9) susceptible d'être bloquée sur le tube tige (2) et l'équipement de pression axiale consistant dans une bague de pression (10) disposée de façon rotative, sur la bague de serrage (9) et sur la bague de pression, (10) des moyens étant prévus pour faire tourner la bague de pression (10) par rapport à la bague de serrage (9) **caractérisé en ce que**,
- la bague de pression est disposée directement sous la bague de serrage (9) et
- **en ce que** les faces frontales qui se font face de la bague de serrage (9) et de la bague de pression (10) présentent chacune au moins un contour (20, 13) saillant de la surface frontale, au moins l'un des contours (13, 20) présentant une pente.

2. Dispositif de sécurité selon la revendication 1,
**caractérisé en ce que**,
la bague de serrage (9) est une bague ouverte et comporte pour son blocage sur le tube tige (2) une vis de serrage (19).

3. Dispositif de sécurité selon la revendication 1,
**caractérisé en ce que**,
le au moins un contour saillant hors du plan d'une surface frontale ne présentant aucune pente est en forme de came.

4. Dispositif de sécurité selon la revendication 1 ou 3,
**caractérisé en ce que**,
il est prévu pour chaque surface frontale faisant face au moins deux contours saillants.

5. Dispositif de sécurité selon l'une quelconque des revendications 1, 3 ou 4, **caractérisé en ce que**,
deux contours saillant du plan des surfaces frontales sont diamétralement opposés.

6. Dispositif de sécurité selon la revendication 1 ou 3,
**caractérisé en ce que**,
chaque fois trois contours (13, 20) saillant hors du plan des surfaces frontales sont prévus.

7. Dispositif de sécurité selon l'une quelconque des revendications 1 ou 4 à 6,
**caractérisé en ce que**,
les deux surfaces frontales qui se font face de la bague de serrage (9) et de la bague de pression (10) présentent une pente.

8. Dispositif de sécurité selon l'une quelconque des revendications 1 ou 4 à 7,
**caractérisé en ce que**,
les contours saillant hors de la ou des surface(s), présentant une pente comportent une surface analogue à une dent de scie.

9. Dispositif de sécurité selon la revendication 1,
**caractérisé en ce que**,
en tant que moyens pour la rotation de la bague de pression (10) par rapport à la bague de serrage (9), il est prévu sur la bague de pression (10) un élément de pression, sur lequel un actionneur d'un dispositif de réglage disposé sur la bague de serrage (9) s'applique de façon tangentielle.

10. Dispositif de sécurité selon la revendication 9,
**caractérisé en ce que**,
l'élément de pression est un goujon (14) et le dispositif de réglage de la bague de serrage (9) consiste dans un renfort de l'enveloppe de la bague de serrage (9) dans lequel est ménagé un évidement (15) réceptionnant le goujon, se prolongeant le long de l'enveloppe de la bague de serrage (14) dans lequel débouche pour sa part un taraudage (16) s'étendant de façon tangentielle par rapport à l'enveloppe de la bague de serrage (9), et **en ce que**, en tant qu'actionneur, une vis de serrage (17) qui par son extrémité vissée est incidente sur le goujon (14) et déplace ce dernier dans l'évidement (15) est susceptible d'être vissée dans le taraudage (16).
